# EUROPEAN PATENT APPLICATION

(11) **EP 4 752 343 A1**
(43) Date of publication of application: **03.06.2026**
(21) Application number: 24846094.1
(22) Date of filing: 26.07.2024
(51) Int. Cl.: F01N 3/20, F02M 21/02, F01N 9/00, B63H 21/32, F01N 3/10

(54) **ENGINE SYSTEM AND SHIP COMPRISING SAME**

(30) Priority: 27.07.2023 KR 20230098116; 23.10.2023 KR 20230142169; 18.04.2024 KR 20240052169
(71) Applicant: HD Hyundai Heavy Industries Co., Ltd., Dong-gu Ulsan 44032 (KR)
(72) Inventor: KWON, Young Woo, Ulsan 44032 (KR); SEO, Woong Bin, Ulsan 44032 (KR)
(74) Representative: Ribeiro, James Michael
(86) International application number: PCT/KR2024/010969
(87) International publication number: WO 2025/023793

(57) **Abstract**

The present invention provides an engine system which includes an engine configured to use ammonia fuel; a gas receiver disposed at a rear stage of the engine and configured to accommodate exhaust gas generated by the engine; and a connecting unit configured to connect the engine and the gas receiver to discharge exhaust gas generated by the engine to the gas receiver, wherein in the connecting unit, a catalyst layer is provided at a portion through which the exhaust gas passes, and the catalyst layer is either a selective catalytic reduction layer in which ammonia in the exhaust gas acts as a reducing agent to cause a selective catalytic reduction (SCR) reaction to remove nitrogen oxides, or ammonia in the exhaust gas acts as a reducing agent to cause a selective catalytic reduction (SCR) reaction to remove nitrogen oxides under the condition that the exhaust gas contains ammonia and nitrogen oxides, and ammonia in the exhaust gas is oxidized and removed under the condition that the exhaust gas contains no nitrogen oxide.

## Description

### [Technical Field]

### Cross-Citation to Related Applications

This application claims the benefits of priorities based on Korean Patent Application No. 10-2023-0098116 filed on July 27, 2023, Korean Patent Application No. 10-2023-0142169 filed on October 23, 2023, and Korean Patent Application No. 10-2024-0052169 filed on April 18, 2024, the entire contents of which are incorporated herein as part of this specification.

### Technical Field

The present invention relates to an exhaust gas post-processing system and engine system in which a selective catalytic reduction reaction occurs. The present invention also relates to a ship including such an exhaust gas post-processing system and engine system.

### [Background Art]

After fuel is burned in an engine, exhaust gas is generated. The exhaust gas contains harmful substances such as nitrogen oxides, methane, and sulfur oxides, and regulations against these substances are becoming increasingly strict. Therefore, research is being conducted on exhaust gas post-processing systems that remove harmful substances contained in exhaust gases to satisfy the emission required by these regulations.

As one example of the post-processing system, a selective catalytic reduction (SCR) device reduces nitrogen oxides contained in exhaust gases to nitrogen and water by making them react with a reducing agent and a denitrification catalyst. As another example, ammonia may be oxidized and removed using an ammonia oxidation catalyst (AOC).

When ammonia is used as a fuel, unburned ammonia which is not burned in an engine, i.e., ammonia slip, is generated. Therefore, both nitrogen oxides and ammonia are present in the exhaust gases generated by the engine using ammonia fuel. Based on these ammonia fuel characteristics, improvements to engine systems and exhaust gas post-processing systems can be made.

### [Disclosure]

### [Technical Problem]

The present invention is intended to efficiently remove nitrogen oxides and ammonia contained in exhaust gases generated by engines using ammonia as fuel.

In addition, the present invention is intended to primarily remove nitrogen oxides and ammonia contained in exhaust gases generated by engines using ammonia as fuel within the engine system.

In addition, the present invention is intended to efficiently supply the reducing agent required for a selective catalytic reduction device that processes exhaust gas generated by an engine using ammonia as fuel.

In addition, the present invention is intended to provide a ship including an engine system and an exhaust gas post-processing system according to the present invention.

### [Technical Solution]

An engine system according to an embodiment of the present invention includes an engine configured to use ammonia fuel; a gas receiver disposed at a rear stage of the engine and configured to accommodate exhaust gas generated by the engine; and a connecting unit configured to connect the engine and the gas receiver to discharge exhaust gas generated by the engine to the gas receiver, wherein in the connecting unit, a catalyst layer is provided at a portion through which the exhaust gas passes, and the catalyst layer is either a selective catalytic reduction layer in which ammonia in the exhaust gas acts as a reducing agent to cause a selective catalytic reduction (SCR) reaction to remove nitrogen oxides, or under the condition that the exhaust gas contains ammonia and nitrogen oxides, an ammonia in the exhaust gas acts as a reducing agent to cause a selective catalytic reduction (SCR) reaction to remove nitrogen oxides, and under the condition that the exhaust gas contains no nitrogen oxides, ammonia in the exhaust gas may be oxidized and removed.

In an example, the engine system may further include a nitrogen oxide concentration sensor configured to measure the nitrogen oxide concentration of exhaust gas contained in the gas receiver; and a control unit configured to control a reducing agent for the selective catalytic reduction reaction to be supplied to the catalyst layer when the nitrogen oxide concentration measured by the nitrogen oxide concentration sensor exceeds a predetermined reference value.

In an example, the control unit may control to supply additional ammonia to the engine through a fuel supply unit of the engine in an exhaust process in which no fuel combustion occurs during an operating process of the engine when the nitrogen oxide concentration measured by the nitrogen oxide concentration sensor exceeds a predetermined reference value.

In one example, the system further includes a reducing agent supply unit configured to supply a reducing agent for a selective catalytic reduction reaction to the catalyst layer, and the control unit may control to supply the reducing agent for the selective catalytic reduction reaction to the catalyst layer through the reducing agent supply unit when the nitrogen oxide concentration measured by the nitrogen oxide concentration sensor exceeds a predetermined reference value.

An engine system according to an embodiment of the present invention may include an engine configured to use ammonia fuel; and a control unit configured to control to supply additional ammonia to the engine through a fuel supply unit of the engine in an exhaust process in which no fuel combustion occurs during an operating process of the engine.

A ship may include the engine system according to one embodiment of the present invention.

### [Advantageous Effects]

According to the present invention, nitrogen oxides and ammonia contained in exhaust gas generated by an engine using ammonia as fuel can be efficiently removed.

According to the present invention, nitrogen oxides and ammonia contained in exhaust gas generated by an engine using ammonia as fuel can be primarily removed within the engine system, thereby reducing the number of selective catalytic reduction devices at rear stage of the engine system.

Furthermore, the present invention can efficiently supply the reducing agent required for a selective catalytic reduction device that processes exhaust gas generated by an engine using ammonia as fuel.

### [Description of Drawings]

FIG. 1 is a diagram illustrating an exhaust gas post-processing system according to a first embodiment of the present invention.
FIG. 2 is a diagram illustrating an engine system according to a second embodiment of the present invention.
FIG. 3 is a diagram illustrating an exhaust gas post-processing system according to a third embodiment of the present invention.
FIG. 4 is a diagram illustrating an exhaust gas post-processing system according to a fourth embodiment of the present invention.

### [Best Mode]

Hereinafter, some embodiments of the present invention will be described in detail with reference to exemplary drawings. When assigning reference numerals to components in each drawing, it should be noted that identical components have the same numerals as far as possible even when represented in other drawings. Further, in describing embodiments of the present invention, if a detailed description of related known structures or functions is determined to hinder understanding of the embodiments of the present invention, such a detailed description will be omitted.

In addition, when describing components of embodiments of the present invention, terms such as "first," "second," "A, " "B, " "(a)," and "(b)" may be used. These terms are used only to distinguish the component from other components, and the nature, order or sequence of the components are not limited by the terms. When a component is described as being "connected," "coupled," or "accessed" to another component, it should be understood that the component can be directly connected or combined to the another component, but that other components can also be "connected," "coupled," or "accessed" between the respective components.

In this specification, the terms "front-back direction," "left-right direction," and "up-down direction" are used for convenience of explanation, and may be directions orthogonal to each other. However, these directions are determined relative to each other, and the "up-down" direction may not necessarily mean a vertical direction.

### <First embodiment>

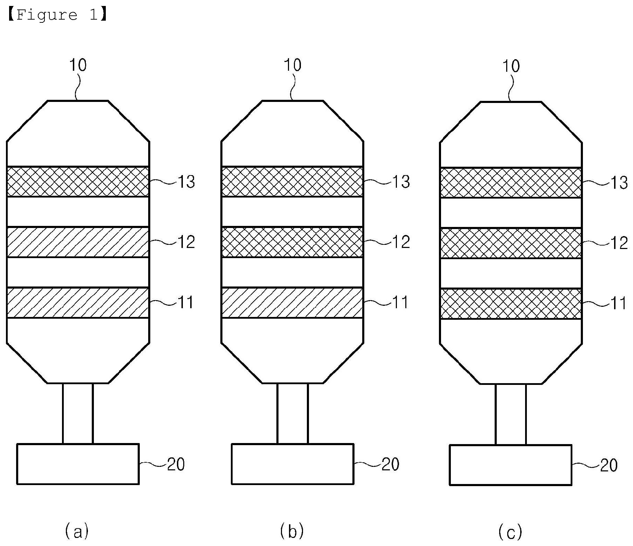

FIG. 1 is a diagram illustrating an exhaust gas post-processing system according to a first embodiment of the present invention.

Referring to FIG. 1, an exhaust gas post-processing system 10 according to a first embodiment of the present invention is an exhaust gas post-processing system 10 for post-processing the exhaust gas generated by an engine 20 using ammonia as fuel, and includes a plurality of catalyst layers, the plurality of catalyst layers includes at least one composite ammonia purification layer, and in the composite ammonia purification layer, under the condition that ammonia and nitrogen oxides are contained in the exhaust gas, ammonia in the exhaust gas acts as a reducing agent to cause a selective catalytic reduction reaction to remove nitrogen oxides, and under the condition that nitrogen oxides are not contained in the exhaust gas, ammonia in the exhaust gas may be oxidized and removed. Each component will be described in detail below.

Exhaust gas generated by an engine 20 using ammonia as fuel 20 contains not only nitrogen oxides but also ammonia not burned in the engine. The exhaust gas post-processing system 10 is provided at a rear stage of the engine to remove nitrogen oxides and ammonia.

The exhaust gas post-processing system 10 includes multiple catalyst layers, which may be made up of multi-stage. Therefore, even if nitrogen oxides and ammonia in the exhaust gas are not completely removed from the catalyst layer of a front stage, these can be removed stepwise through the catalyst layer of a rear stage. This can enhance the removal efficiency of nitrogen oxide and ammonia.

The multiple catalyst layers may include at least one composite ammonia purification layer. The existing ammonia purification catalysts only function to oxidize and remove ammonia. However, the composite ammonia purification catalysts can function as both an ammonia purification catalyst and a catalyst of a selective reduction reaction depending on the conditions. Specifically, when both ammonia and nitrogen oxides are present in the exhaust gas, the ammonia acts as a reducing agent to reduce nitrogen oxides to nitrogen for removal. Conversely, when ammonia is present in the exhaust gas but nitrogen oxides are not, the composite ammonia purification catalyst acts to oxidize and remove ammonia.

Exhaust gas generated by the engine 20 using ammonia as fuel contains unburned ammonia. In the composite ammonia purification layer, the ammonia in the exhaust gas acts as a reducing agent for the selective catalytic reduction reaction. Therefore, the ammonia contained in the exhaust gas acts as a reducing agent, and may be removed by the composite ammonia purification catalyst in the process of removing nitrogen oxides. Once all nitrogen oxides contained in the exhaust gas are removed by the composite ammonia purification layer of the front stage, a reaction in which the ammonia in the exhaust gas is oxidized and removed occurs in the composite ammonia purification layer of the rear stage. As a result, both nitrogen oxides and ammonia can be removed from the exhaust gas emitted from the engine 20 by going through the exhaust gas post-processing system 10, which includes the composite ammonia purification layer.

Furthermore, the multiple catalyst layers may include a selective catalytic reduction layer in addition to the composite ammonia purification layer. The composite ammonia purification catalyst used in the composite ammonia purification layer can function as both an ammonia purification catalyst and a selective catalytic reduction catalyst, but is relatively expensive. Therefore, by using selective catalytic reduction catalyst layers for some of the catalyst layers rather than using composite ammonia purification layers for all the catalyst layers, costs can be reduced. However, it is preferable to position the composite ammonia purification layer at the rear stage of the selective catalytic reduction layer. This is because if a composite ammonia purification layer is disposed in the front stage to remove all nitrogen oxides from the front stage, no reaction will occur in the selective catalytic reduction layer of the rear stage. Hereinafter, an exhaust gas post-processing system including three-stage catalyst layers will be described as an example.

The exhaust gas post-processing system 10 according to the first embodiment of the present invention can include a first catalyst layer 11, a second catalyst layer 12, and a third catalyst layer 13. The configuration of each catalyst layer will be described below.

For example, as shown in FIG. 1A, each catalyst layer can include a first catalyst layer 11 that removes nitrogen oxides through a selective catalytic reduction reaction; a second catalyst layer 12 that is provided at the rear stage of the first catalyst layer 11 and removes nitrogen oxides through the selective catalytic reduction reaction; and a third catalyst layer 13 which is provided at the rear stage of the second catalyst layer 12 and is a composite ammonia purification layer.

In this case, ammonia contained in the exhaust gas acts as a reducing agent in the first catalyst layer 11 and second catalyst layer 12 to remove nitrogen oxides. The third catalytic layer 13 removes any nitrogen oxides that have not been removed by the first catalytic layer 11 and the second catalytic layer 12, and when all of the nitrogen oxides have been removed, ammonia may be oxidized and removed.

In addition, as shown in FIG. 1B, each catalytic layer may include a first catalytic layer 11 that removes nitrogen oxides, for example, through selective catalytic reduction; a second catalytic layer 12 which is provided at the rear stage of the first catalytic layer 11 and is a composite ammonia purification layer; and a third catalytic layer 13 which is provided at the rear stage of the second catalytic layer 12 and is a composite ammonia purification layer.

In this case, ammonia contained in the exhaust gas acts as a reducing agent to remove nitrogen oxides in the first catalyst layer 11. The second catalyst layer 12 and third catalyst layer 13 remove any nitrogen oxides that have not been removed from the first catalyst layer 11. Once all the nitrogen oxides have been removed, ammonia may be oxidized and removed.

As shown in FIG. 1C, each catalyst layer may include, for example, the first catalyst layer 11 which is a composite ammonia purification layer; the second catalyst layer 12 which is provided at the rear stage of the first catalyst layer 11 and is also a composite ammonia purification layer; and the third catalyst layer 13 which is provided at the rear stage of the second catalyst layer 12 and is also a composite ammonia purification layer.

In this case, the first catalyst layer 11, the second catalyst layer 12, and the third catalyst layer 13 first remove nitrogen oxides, and once all the nitrogen oxides have been removed, ammonia is oxidized and removed.

The exhaust gas post-processing system 10 having three-stage catalyst layers have been described above, but this is merely an example. Catalyst layers of different number of stages or different combination may be used taking into consideration factors such as nitrogen oxide reduction and cost efficiency.

### <Second embodiment>

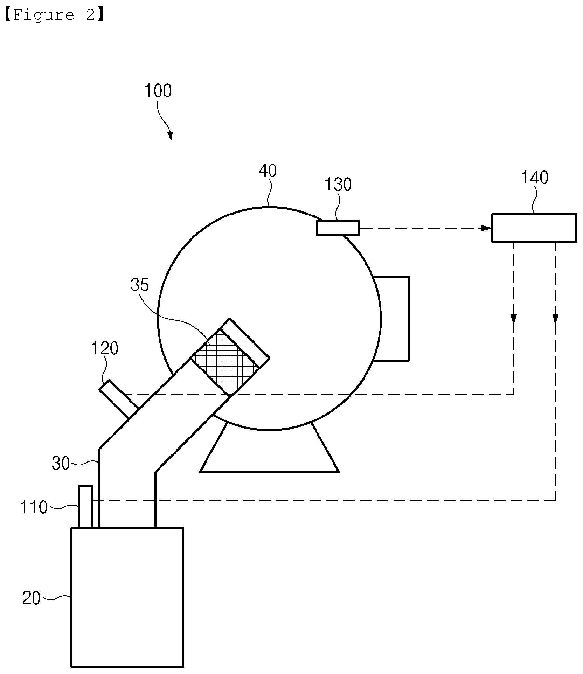

FIG. 2 is a diagram illustrating an engine system according to the second embodiment of the present invention.

Referring to FIG. 2, the engine system includes an engine 20 using ammonia fuel; a gas receiver 40 that is disposed at the rear stage of the engine 20 and receives exhaust gas generated by the engine 20; and a connecting unit 30 that connects the engine 20 and the gas receiver 40 and through which exhaust gas generated by the engine 20 is discharged into the gas receiver 40, wherein the connecting unit 30 is provided with a catalyst layer 35 in the portion through which the exhaust gas passes. The catalyst layer 35 is a selective catalytic reduction layer in which ammonia in the exhaust gas acts as a reducing agent to cause a selective catalytic reduction reaction and remove nitrogen oxides, or ammonia in the exhaust gas acts as a reducing agent to cause a selective catalytic reduction reaction to remove nitrogen oxides under the condition that ammonia and nitrogen oxides are contained in the exhaust gas, and ammonia in the exhaust gas may be oxidized and removed under the condition that the exhaust gas contains no nitrogen oxides. Each component will be described in detail below.

Exhaust gas generated by the engine 20 using ammonia fuel may contain nitrogen oxides and unburned ammonia, i.e., ammonia slip. The gas receiver 40 acts to collect exhaust gas emitted from the engine 20 and then supply it to a turbocharger. This is for stabilizing the exhaust gas and then supplying it to the turbocharger. While FIG. 2 shows one engine 20 connected to the gas receiver 40, multiple engines 20 can be connected to the gas receiver 40 to collect their exhaust gases.

The connecting unit 30, which connects the engine 20 to the gas receiver 40, serves as a passage through which exhaust gas emitted from the engine 20 travels to the gas receiver 40. One end of the connecting unit 30 is connected to the engine 20, and the other end of the connecting unit 30 is connected to the gas receiver 40.

The connecting unit 30 may be provided with a catalyst layer 35 in the portion through which the exhaust gas passes. The catalyst layer 35 can reduce and remove nitrogen oxides contained in the exhaust gas through a selective catalytic reduction reaction. The catalyst layer 35 may also be a composite ammonia purification layer.

When diesel fuel is used, since the exhaust gas does not contain ammonia, even if a catalyst layer 35 is placed in the connecting unit 30, nitrogen oxides are not be removed due to the lack of a reducing agent for the selective catalytic reduction reaction. However, when ammonia fuel is used, ammonia is contained in the exhaust gas, and the ammonia acts as a reducing agent for the selective catalytic reduction reaction in the catalyst layer 35, thereby removing nitrogen oxides from the exhaust gas. Therefore, nitrogen oxides in the exhaust gas are primarily removed from the catalyst layer 35 in the connecting unit 30, and the amount of nitrogen oxides contained in the exhaust gas entering the selective catalytic reduction device that can be disposed at the rear stage of the engine system 100 is reduced, thereby enabling the size of the selective catalytic reduction device of the rear stage to be reduced.

The nitrogen oxide concentration sensor 130 can measure the nitrogen oxide concentration of the exhaust gas accommodated in the gas receiver 40. If the nitrogen oxide concentration measured by the nitrogen oxide concentration sensor 130 exceeds a predetermined reference value, the control unit 140 can control the supply of a reducing agent for the selective catalytic reduction reaction to the catalyst layer 35.

If the amount of ammonia slipped from the engine 20, i.e., the amount of reducing agent required for the selective catalytic reduction reaction, is small and thus the selective catalytic reduction reaction does not occur sufficiently in the catalyst layer 35, a high nitrogen oxide concentration may be measured in the nitrogen oxide concentration sensor 130. In this case, the nitrogen oxide concentration measured by the nitrogen oxide concentration sensor 130 may be lowered by supplying additional reducing agent to the catalyst layer 35 to promote the selective catalytic reduction reaction in the catalyst layer 35. A method for supplying the reducing agent for the selective catalytic reduction reaction to the catalyst layer 35 will be described below.

For example, when the nitrogen oxide concentration measured by the nitrogen oxide concentration sensor 130 exceeds a predetermined reference value, the control unit 140 may control to additionally supply ammonia to the engine 20 through the fuel supply unit 110 of the engine 20 in the exhaust process, in which no fuel combustion occurs during the operation of the engine 20. The cycle of the engine 20 using ammonia fuel operates very similarly to the diesel cycle. The diesel cycle generates power while fuel is burned through compression and ignition processes, and exhaust gas is emitted in the exhaust process. Therefore, when ammonia is supplied through the fuel supply unit 110 of the engine 20 in the exhaust process, the ammonia is not burned and is emitted as it is along with the exhaust gas. As a result, additional ammonia may be supplied to the catalyst layer 35 as the reducing agent.

However, the control unit 140, which controls to additionally supply ammonia to the engine 20 through the fuel supply unit 110 of the engine 20 in the exhaust process in which no fuel combustion occurs during the operation of the engine 20, is a configuration that can be applied to any engine 20 using ammonia as fuel. Therefore, even if the nitrogen oxide concentration sensor 130 or the catalyst layer 35 described above is omitted, it can be independently applied to the engine 20 using ammonia as fuel. The ammonia supplied here can be used as a reducing agent in a selective catalytic reduction device disposed at the rear stage of the engine system 100.

The reducing agent supply unit 120 which supplies the reducing agent for the selective catalytic reduction reaction to the catalyst layer 35 may further be included. The reducing agent supply unit 120 may be externally connected to the connection unit 30 in the form of a nozzle. However, the reducing agent supply unit 120 may be provided in other forms that can supply the reducing agent for the selective catalytic reduction reaction to the catalyst layer 35, without being limited thereto.

When the nitrogen oxide concentration measured by the nitrogen oxide concentration sensor 130 exceeds a predetermined reference value, the control unit 140 may control the reducing agent for the selective catalytic reduction reaction to be supplied to the catalyst layer 35 through the reducing agent supply unit 120. Examples of reducing agents may include, but are not limited to, ammonia, ammonia water, and urea water.

Furthermore, the nitrogen oxide concentration measured by the nitrogen oxide concentration sensor 130 can be used not only to control the supply of reducing agent to the catalyst layer 35, but also to control a selective catalytic reduction device that may be disposed at the rear stage of the engine system 100.

### <Third Embodiment>

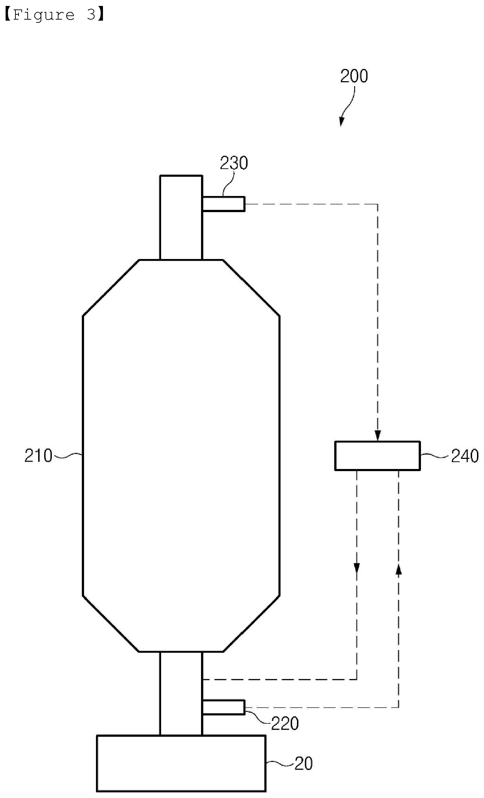

FIG. 3 is diagram illustrating an exhaust gas post-processing system according to a third embodiment of the present invention.

Referring to FIG. 3, an exhaust gas post-processing system 200 according to the third embodiment of the present invention may include a selective catalytic reduction device 210 that is disposed at the rear stage of an engine 20 using ammonia fuel and removes nitrogen oxides in exhaust gas generated by the engine 20 through the selective catalytic reduction reaction; sensors 220 and 230 that measure the concentration of at least one of ammonia and nitrogen oxides contained in the exhaust gas; and a control unit 240 that adjusts the type and amount of reducing agent supplied to the selective catalytic reduction device 210 depending on the concentrations of nitrogen oxide and ammonia measured by the sensors 220 and 230.

Conventionally, the reducing agent required for the Selective catalytic reduction reaction was separately injected into the selective catalytic reduction device 210 through a device such as a nozzle. However, since the exhaust gas emitted from the engine 20 using ammonia as fuel may contain unburned ammonia, the efficiency can be enhanced by adjusting the type and amount of the reducing agent that is separately injected. The control of the supply of reducing agent will be described in detail below.

The front stage sensor 220 is disposed between the engine 20 and the selective catalytic reduction device 210, and can measure the concentrations of ammonia and nitrogen oxides contained in exhaust gas emitted from the engine 20. The control unit 240 can control to increase the amount of reducing agent supplied when the amount of ammonia measured by the front stage sensor 220 is less than the amount of ammonia required to maximize the removal of nitrogen oxides. Furthermore, if the amount of ammonia measured by the front stage sensor 220 is sufficient to maximize the removal of nitrogen oxides, the control unit 240 can control to decrease the amount of reducing agent supplied.

The rear stage sensor 230 is disposed at the rear stage of the selective catalytic reduction device 210, and can measure the concentration of nitrogen oxides contained in exhaust gas that has passed through the selective catalytic reduction device 210. The control unit 240 can control to increase the amount of reducing agent supplied if it is determined that the catalytic reaction in the selective catalytic reduction device 210 is not maximized based on the concentrations of ammonia and nitrogen oxides measured by the rear stage sensor 230. Furthermore, if the ammonia concentration measured by the rear stage sensor 230 is higher than a predetermined value, the control unit 240 can control to reduce the amount of reducing agent supplied.

By utilizing both concentrations of the ammonia and nitrogen oxide measured by the front stage sensor 220 and rear stage sensor 230, the difference in ammonia and nitrogen oxide concentrations of the front and rear stages of the selective catalytic reduction device 210 can be determined, thereby obtaining information on the extent of reaction occurred in the selective catalytic reduction device 210. The control unit 240 can control to increase the amount of reducing agent supplied if it is determined that a sufficient reaction has not occurred in the selective catalytic reduction device 210. Furthermore, if it is determined that a sufficient reaction has occurred in the selective catalytic reduction device 210, the control unit 240 can control to reduce the amount of reducing agent supplied.

The types of reducing agents mentioned above may include ammonia, aqueous ammonia, and aqueous urea. Since the components and concentrations contained in each type of reducing agent differ, the amount of reducing agent injected to remove nitrogen oxides may vary. Therefore, the control unit 240 can control the amount of reducing agent supplied to be different for each type of reducing agent, even if the same amount of nitrogen oxides is removed. The type of reducing agent can also be changed depending on the amount of unburned ammonia.

### <Fourth embodiment>

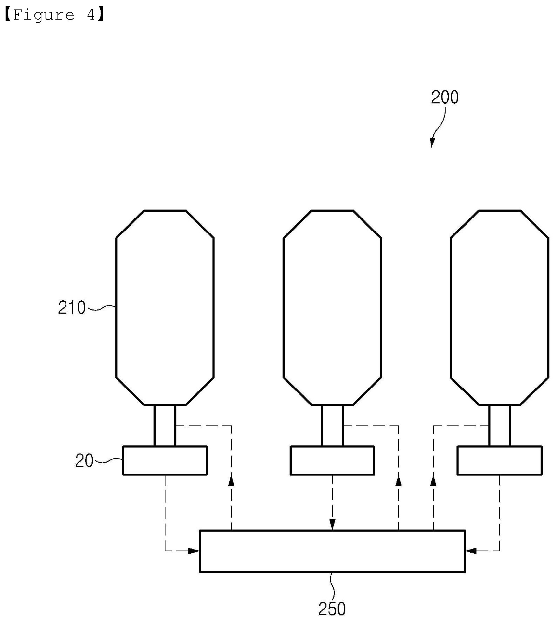

FIG. 4 is a diagram illustrating an exhaust gas post-processing system according to a fourth embodiment of the present invention.

The system may include multiple selective catalytic reduction devices 210 that are disposed at each of the rear stages of multiple engines 20 that use different fuels, and remove nitrogen oxides from exhaust gas generated by the engines 20 through selective catalytic reduction reactions; and a control unit 250 that adjusts the type and amount of reducing agent supplied to the multiple selective catalytic reduction devices 210 disposed at the rear stages of the multiple engines 20 depending on the type of fuel used by the multiple engines 20.

The types and ratios of substances contained in exhaust gas generated by each engine 20 may vary depending on the type of fuel injected into the engines 20. Specifically, even with the same engine load or fuel volume, different types of fuel may result in different amounts of nitrogen oxides and the presence or absence of ammonia in the exhaust gas. Therefore, the control unit 250 can control the amount and type of reducing agent supplied to the selective catalytic reduction devices 210 disposed at the rear stages of each engine 20 to be different depending on the type of fuel supplied to the engine 20.

The control unit 250 calculates the amount of nitrogen oxides or ammonia emitted depending on the type and amount of fuel supplied, the load of the engines 20, etc., and the corresponding amount of reducing agent required to reduce nitrogen oxides, and can automatically control the type and amount of reducing agent to be supplied to the selective catalytic reduction device 210 depending on the fuel supply status of each engine 20.

Additionally, the ship may include the engine system 100 and the exhaust gas post-processing systems 10 and 200 according to an embodiment of the present invention.

The above description is merely an exemplary description of the technical idea of the present invention, and thus various modifications and variations can be made without departing from the essential characteristics of the present invention by those skilled in the art to which the present invention pertains. Therefore, the embodiments disclosed in the present invention are used not to limit but to describe the technical idea of the present invention, and the scope of technical idea of the present invention is not limited to the embodiments. It should be interpreted that the protection scope of the present invention is defined by the following claims, and that all technical ideas within a scope equivalent thereto are included in the scope of rights of the present invention.

## Claims

1. An engine system, comprising:
an engine configured to use ammonia fuel;
a gas receiver disposed at a rear stage of the engine and configured to accommodate exhaust gas generated by the engine; and
a connecting unit configured to connect the engine and the gas receiver to discharge exhaust gas generated by the engine to the gas receiver,
wherein in the connecting unit, a catalyst layer is provided at a portion through which the exhaust gas passes, and
the catalyst layer is either
a selective catalytic reduction layer in which ammonia in the exhaust gas acts as a reducing agent to cause a selective catalytic reduction (SCR) reaction to remove nitrogen oxides, or
a composite ammonia purification layer in which ammonia in the exhaust gas acts as a reducing agent to cause a selective catalytic reduction (SCR) reaction to remove nitrogen oxides under the condition that the exhaust gas contains ammonia and nitrogen oxides, and ammonia in the exhaust gas is oxidized and removed under the condition that the exhaust gas contains no nitrogen oxides.

2. The engine system according to claim 1, further comprising:
a nitrogen oxide concentration sensor configured to measure the nitrogen oxide concentration of exhaust gas contained in the gas receiver; and
a control unit configured to control a reducing agent for the selective catalytic reduction reaction to be supplied to the catalyst layer when the nitrogen oxide concentration measured by the nitrogen oxide concentration sensor exceeds a predetermined reference value.

3. The engine system according to claim 2,
wherein the control unit controls to supply additional ammonia to the engine through a fuel supply unit of the engine in an exhaust process in which no fuel combustion occurs during an operating process of the engine when the nitrogen oxide concentration measured by the nitrogen oxide concentration sensor exceeds a predetermined reference value.

4. The engine system according to claim 2, further comprising:
a reducing agent supply unit configured to supply a reducing agent for a selective catalytic reduction reaction to the catalyst layer,
wherein the control unit controls to supply the reducing agent for the selective catalytic reduction reaction to the catalyst layer through the reducing agent supply unit when the nitrogen oxide concentration measured by the nitrogen oxide concentration sensor exceeds a predetermined reference value.

5. An engine system, comprising:
an engine configured to use ammonia fuel; and
a control unit configured to control to supply additional ammonia to the engine through a fuel supply unit of the engine in an exhaust process in which no fuel combustion occurs during an operating process of the engine.

6. A ship, comprising the engine system according to any one of claims 1 to 5.
